# EUROPÄISCHE PATENTSCHRIFT

(11) **EP 1 054 735 B1**
(45) Veröffentlichungstag und Bekanntmachung des Hinweises auf die Patenterteilung: **28.05.2003**
(21) Anmeldenummer: 99913166.7
(22) Anmeldetag: 10.02.1999
(51) Int. Cl.: B01L 7/00, C12Q 1/68

(54) **MINIATURISIERTER TEMPERATURZONEN FLUSSREAKTOR**
MINIATURIZED TEMPERATURE-ZONE FLOW REACTOR
REACTEUR A FLUX MINIATURISE COMPORTANT DIFFERENTES ZONES DE TEMPERATURES

(30) Priorität: 11.02.1998 DE 19805350
(43) Veröffentlichungstag der Anmeldung: 29.11.2000
(73) Patentinhaber: INSTITUT FÜR PHYSIKALISCHE HOCHTECHNOLOGIE E.V., 07745 Jena (DE)
(72) Erfinder: KÖHLER, Johann, Michael, D-07751 Golmsdorf (DE); MOKANSKY, Andreas, D-01277 Dresden (DE); POSER, Siegfried, D-07749 Jena (DE); SCHULZ, Torsten, D-07743 Jena (DE)
(74) Vertreter: Pfeiffer, Rolf-Gerd, Dipl.-Phys.
(86) Internationale Anmeldenummer: EP9901014
(87) Internationale Veröffentlichungsnummer: WO99041015

(56) Entgegenhaltungen:
- WO-A-92/13967
- WO-A-94/21372
- WO-A-97/14497
- DE-C- 4 435 107

## Beschreibung

Die Erfindung betrifft einen miniaturisierten Temperaturzonen Flußreaktor, der bei thermisch zu kontrollierenden, biochemischen bzw. molekularbiologischen Prozessen, insbesondere beim Verfahren der sogenannten Polymerase-Ketten-Reaktion, im weiteren mit PCR bezeichnet, bei dem aus einem Gemisch von DNA-Sequenzen bestimmte Sequenzen vervielfacht werden, Anwendung findet.

Bei der Durchführung von thermisch kontrollierten, biochemischen bzw. molekularbiologischen Prozessen sind häufig Prozeßschritte mit unterschiedlicher Temperaturbeaufschlagung erforderlich. Von besonderer Bedeutung sind solche wechselnden Temperaturbeaufschlagungen bei der sogenannten PCR.
Das Verfahren der PCR ist in den letzten Jahren zur Vervielfachung bestimmter DNA-Sequenzen entwickelt worden und in seinen Grundsätzen von Darnell, J.; Lodish, H.; Baltimore, D. in "Molekulare Zellbiologie, Walter de Gruyter, Berlin-New York 1994, S. 256/257" ausgeführt. Unter anderem ist bei diesem Verfahren wesentlich, daß Gemische aus DNA-Sequenzen einer definierten Temperaturwechselbehandlung unterworfen werden. Dazu finden stationäre Probenbehandlungsapparaturen Verwendung, bei denen die entsprechenden Proben in Probenkammern eingegeben und periodisch einem Warm-Kalt-Temperaturzyklus unterworfen werden, wobei sich je nach definiert vorgegebenen Primern die jeweils gewünschten DNA-Sequenzen vervielfachen. Die Effektivität bislang bekannter Probenkammern wird dabei als nicht ausreichend angesehen. Aus diesem Grund ist in jüngster Zeit eine miniaturisierte Probenkammer vorgeschlagen worden (Northrup et al, DNA Amplification with Microfabricated reaction chamber, 7th International Conference on Solid State Sensors and Actuators, Proc. Transducers 1993, S. 924-26), die eine vierfach schnellere Vervielfachung gewünschter DNA-Sequenzen gegenüber bekannten Anordnungen ermöglicht. Diese bis zu 50 µl Probenflüssigkeit aufnehmende Probenkammer besteht aus einer strukturierten Siliziumzelle mit einer Längsausdehnung in der Größenordnung von 10 mm, welche in einer Probenangriffsrichtung von einer dünnen Membran abgeschlossen ist, über die die entsprechende Temperaturbeaufschlagung mittels miniaturisierter Heizelemente erfolgt. Auch bei dieser Vorrichtung wird die zu vervielfachende DNA-Sequenz über Mikrokanäle in die Kammer eingebracht, einer Polymerase-Ketten-Reaktion unterworfen und anschließend wieder abgezogen. Trotz der mit dieser Vorrichtung erzielten Vorteile haftet ihr im wesentlichen der Nachteil an, daß auch diese Probenkammer als Ganzes beheizt und gekühlt werden muß, womit sich nur begrenzte Temperaturwechselraten erreichen lassen. Insbesondere bei weiterer Reduzierung der Probengröße fällt dabei die parasitäre Wärmekapazität der Probenkammer und ggf. eines notwendigen Temperierblocks gegenüber der Probenflüssigkeit immer stärker ins Gewicht, so daß die prinzipiell bei kleinen Flüssigkeitsvolumina denkbaren hohen Temperaturwechselraten nicht erreicht werden können, wodurch die Effektivität des Verfahrens relativ gering bleibt. Darüber hinaus ist zwecks Erreichung jeweils konstanter Temperaturregimes für die Probenflüssigkeit ein relativ aufwendiger Steuer- und Regelaufwand erforderlich, wobei die erbrachte Heiz- bzw. Kühlleistung im wesentlichen nicht in der Probenflüssigkeit, sondern in den sie umgebenden Baugruppen verbraucht wird.
Desweiteren ist aus US-PS 5,270,183 ein im Durchflußprinzip arbeitender Thermocycler bekannt geworden. bei dem die zu amplifizierende Probenflüssigkeit durch eine Rohrleitung geschickt wird, welche nacheinander um mehrere, auf unterschiedlichen Temperaturen gehaltene Zylinder ein oder mehrfach aufgewickelt ist. Grundsätzlich sind mit einer solchen Ausbildung auch relativ kleine Probenmengen, bis herunter zu ca. 25 µl, amplifizierbar. Eine derartige Vorrichtung ist in ihrer Handhabung jedoch recht unpraktikabel und erfordert eine hohe Kunstfertigkeit vom Gerätehersteller, so daß sie für eine Serienfertigung gänzlich ungeeignet ist.
Vorliegender Erfindung am nächsten kommt ein in WO 96/10456 beschriebener Fluß-Thermocycler, bei dem aus der sogenannten Mikrosystemtechnik bekannte Strukturierungstechnologien angewendet werden, um eine Probenaufnahmekammer zu schaffen, die eine dynamische Probenbehandlung auch sehr kleiner Mengen, z.T. sehr teurer Materialien, ermöglicht. Durch diesen Vorschlag wird erreicht, daß die in jeweils vorgesehenen Heiz- und Kühlzonen gerade einer Behandlung unterworfenen Probenteilvolumina einen homogenen Temperaturdurchsatz erfahren, was ebenfalls eine Ausbeuteerhöhung der zu amplifizierenden Substanz bewirkt. Weiterhin wird durch den anordnungsbedingten Wegfall von Heiz- und Kühlprozessen der Wandungsmaterialien und die drastische Minimierung parasitärer Wärmekapazitäten und Wärmeeinflüsse nicht nur ein erheblich geringerer Steuer- und Regelaufwand erforderlich, sondern der Gesamtprozeßdurchlauf erfährt auch eine wesentliche Zeitverkürzung. Dabei braucht jeweils nur soviel Heiz- und Kühlleistung eingespeist zu werden, wie im Probenflüssigkeitsstrom transportiert wird. Darüber hinaus ermöglicht die in WO 96/10456 Thermocyclerausbildung nicht nur eine kontinuierliche Prozeßführung, sondern auch einen seriellen Betrieb, indem unterschiedliche Substanzen nacheinander dem Thermocycler zuführbar sind, ohne daß es zu störenden Vermischungen mit der noch in der Anordnung befindlichen Probe kommen würde. Dieser Lösung haftet jedoch der Nachteil an, daß sie zum einen, einen äußerst präzisen Strukturierungsprozeß zur Herstellung dort vorgesehener Membranen erfordert, zum anderen kommt es durch den Aufbau der dort beschriebenen Vorrichtung zumindest bei Teildurchläufen zu einer unerwünscht hohen Verweildauer der Probenflüssigkeit in den Kühlzonenbereichen, was bei Durchführung einer PCR zur Bildung unerwünschter Nebenprodukte führen kann.

Der Erfindung liegt die Aufgabe zugrunde, einen miniaturisierten Temperaturzonen Flußreaktor anzugeben, der thermisch kontrollierte, biochemische bzw. molekularbiologische Prozesse, insbesondere das Verfahren der Polymerase-Ketten-Reaktion, effektiver als nach dem Stand der Technik durchführen läßt.

Die Aufgabe wird durch die kennzeichnenden Merkmale des ersten Patentanspruchs gelöst. Vorteilhafte Ausgestaltungen sind durch die nachgeordneten Ansprüche erfaßt.
Durch die Erfindung wird ein zyklisches Erwärmen und Abkühlen von Lösungen auf unterschiedliche Temperaturstufen im kontinuierlichen Fluß auf engstem Raum (im Mikrometer-Bereich) realisiert, um z.B. drei Reaktionen, z.B. Denaturierung, Annealing und Extension an DNS, in einer Probe, und insbesondere in mehreren unterschiedlichen Proben, die von einem Trägermedium in sequentierten Abschnitten durch einen geschlossenen Durchflußweg transportiert werden, wiederholt und unter Beibehaltung der Reihenfolge und identischer Probenbehandlung durchführen zu können. Dabei können verschiedene Proben hintereinander injiziert werden, ohne miteinander zu vermischen, und anschließend geordnet in Probenkammern, mit Hilfe der vorgeschlagenen Vorrichtung auch parallel abgelegt werden.

Die Erfindung sieht vor, drei mit Gräben versehene mikrostrukturierte Chips, die aus einem gut wärmeleitfähigen Material bestehen, um einen schlecht wärmeleitfähigen Verbindungschip derart anzuordnen, daß wenigstens ein geschlossener Durchflußweg durch alle Chips gebildet wird. Jeder der Mikrochips wird mit einer vorgebbaren und voneinander unterschiedlichen Temperatur beaufschlagt. Die Zu- und Abflußmündungen der gut wärmeleitfähigen Chips sind von Durchlaßöffnungen des Verbindungschips derart erfaßt, daß die Probenflüssigkeit von A nach B nach C und wieder nach A nach B nach C gelangt, wobei der Prozeß n-mal wiederholbar ist, wobei n für die Anzahl der im Eingangs- (A) und Ausgangschip (C) vorgesehenen Grabenabschnitten steht. Die auf der jeweils gewünschten Temperatur gehaltenen Chips sind dabei alternierend um den Verbindungschip angeordnet, so daß die unterschiedlichen Temperaturzonen thermisch voneinander isoliert sind. Innerhalb eines jeden Chips gleicher Temperatrzone führt dessen höhere Wärmeleitfähigkeit zu einer homogenen Temperaturverteilung der ihn durchlaufenden Flüssigkeit. Weiterhin sind auf den Chips Heizer- und Fühlerstrukturen in Dünnfilmtechnologie integriert. Eine externe Kühlung kann sich auf die kälteste Zone beschränken. Dazu ist bspw. ein Kühlblock, bspw. versehen mit in Dünnschichttechnik ausführbaren Peltierelementen, auf die Oberfläche des kältesten Chips (B) vorgesehen. Alternativ ist auch die Kühlung mit einem Luftstrom möglich.
Weiterhin ist der gekühlte Chip B mit Rückführungskanälen versehen, die bspw. im Querschnitt derart klein ausgeführt sind, daß die Verweildauer der Probe während der Rückführung vom Chip C nach Chip A im Chip B minimiert ist. Dadurch reicht die Zeit nicht, um die Probe während der Rückführung in den Chip A auf die Temperatur des Chips B zu bringen; sie behält weitgehend die Temperatur des Chips C bei. Die Rückführungskanäle können zudem vom Chip B zusätzlich thermisch isoliert sein.
Die Verwendung eines optisch transparenten Materials, z.B. Pyrexglas, für den Verbindungschip erlaubt eine optische in situ Detektion von Reaktionspartnem in der Probe über eine Fluoreszenzdetektion eines zugegebenen Farbstoffs, was insbesondere für Analysezwecke sehr interessant ist.
In den erfindungsgemäßen miniaturisierten Temperaturzonen Flußreaktor werden die einzelnen Proben als Tropfen nacheinander in einen kontinuierlichen Trägerflüssigkeitsstrom injiziert, der durch den miniaturisierten Temperaturzonen Flußreaktor gepumpt wird. Für die Trägerflüssigkeit wurde eine solche ausgewählt, die sich nicht mit der Probenflüssigkeit vermischt; dadurch können unterschiedliche Proben nacheinander verarbeitet werden. Durch Aufhängen des vorgeschlagenen Temperaturzonen Flußreaktors an eine xy-Verschiebeeinheit kann die serielle Abgabe der Probenflüssigkeiten in eine parallele zweidimensionale Anordnung, z.B. eine Nanotiterplatte oder ein Elektrophoresegel, überführt werden. Dabei wird der Reaktor nach dem Befüllen einer Kammer mit einem Probentropfen zur nächsten Kammer weitergeschoben. Der Austritt eines Tropfens kann durch die Brechung eines Lichtstahls an dem Probentropfen in der Trägerflüssigkeit mittels eines Fotometermoduls detektiert werden. Sind auf dem vorgeschlagenen Temperaturzonen Flußreaktor mehrere, voneinander getrennte Durchflußwege vorgesehen oder werden mehrere miniaturisierte Temperaturzonen Flußreaktoren nebeneinander in der vorstehend beschriebenen Weise betrieben, ist die genannte serielle Probenüberführung in eine parallele Anordnung in sehr effizienter Weise realisierbar.

Die Erfindung soll nachstehend anhand eines schematischen Ausführungsbeispiels näher erläutert werden. Es zeigen:
- Fig. 1: in Explosionsdarstellung eine Ausführungsmöglichkeit eines miniaturisierten Temperaturzonen Flußreaktors nach der Erfindung und
- Fig. 2: ein Fotometersignal am Ausgang des miniaturisierten Temperaturzonen Flußreaktors, das verdeutlicht, daß es zu keiner Vermischung einzelner Probenbereiche während des Durchflusses kommt.

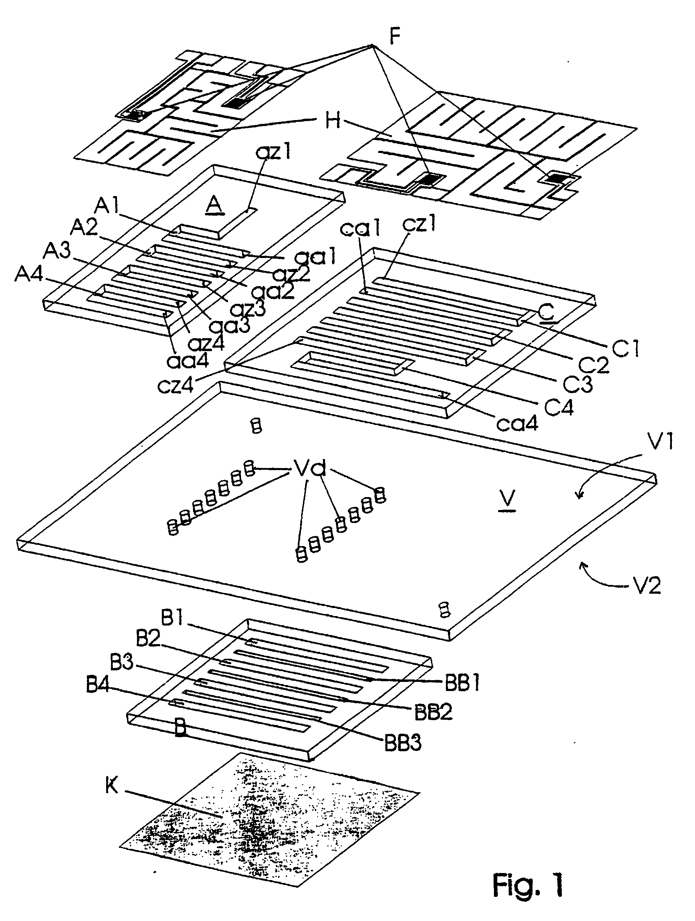

In Figur 1 ist in Explosionsdarstellung ein miniaturisierter Temperaturzonen Flußreaktor dargestellt. Aus Gründen der Übersichtlichkeit ist im Beispiel nur ein geschlossener Durchflußweg dargestellt, dessen Laufweg nachfolgend beschrieben wird. Zunächst ist ein erstes Substratplättchen A vorgesehen, das im Beispiel eine äußere Bemaßung (Länge, Breite, Dicke) von (8•13•0,5) mm aufweist und in das einseitig Gräben eingebracht sind, die eine Länge von 9 mm, eine Breite von 0,536 mm und eine Tiefe von 0,380 mm aufweisen sollen. Unter der hier bezeichneten Länge ist im Beispiel der gesamte Einzelkanalabschnitt zu verstehen, der bspw. zwischen einer Zuflußmündung az2 und der zugehörigen Abflußmündung aa2 eingenommen wird, wodurch dieser Kanalabschnitt im Beispiel ein Volumen von 0,9 µl aufzunehmen vermag. Weiterhin ist ein drittes Substratplättchen C vorgesehen, das im Beispiel eine äußere Bemaßung (Länge, Breite, Dicke) von (14•13•0,5) mm aufweist und in das einseitig Gräben eingebracht sind, die eine Länge von 22 mm, eine Breite von 0,536 mm und eine Tiefe von 0,380 mm aufweisen sollen, so daß dieser Einzelkanalabschnitt ein Volumen von 2,26 µl aufzunehmen vermag. Bezüglich der hier unter Länge zu verstehenden Größe ist eine ebensolche zu verstehen, wie zum ersten Substratplättchen A ausgeführt. Beide genannten Substratplättchen A, C bestehen aus einem gut wärmeleitfähigem Material, im Beispiel aus Silizium, und sind auf der den geöffneten Grabenseiten gegenüberliegenden Seite ganzflächig von mit regelbarer, variierbarer Temperatur beafschlagbaren Heizmitteln H erfaßt. Im Beispiel sind diese Heizmittel H durch mäandriert ausgebildete und direkt auf die Substratplättchen aufgebracht Dünnschichtheizelemente gebildet. Weiterhin sind auf diesen Substraten Dünnschichttemperaturfühler F integriert angebracht, die zur Steuerung und Regelung der jeweils einzustellenden Temperatur Verwendung finden.
Die Zu- und Abflußmündungen az1...aa4 des ersten Substratplättchens A und die Zu- und Abflußmündungen cz1...ca4 des dritten Substratplättchens C sind einseitig im wesentlichen in einer Linie nebeneinander auf einer Teilseite des jeweiligen Substratplättchens angeordnet und voneinander beabstandet mit der Fläche, die den Heizmitteln H gegenüberliegt, auf einer ersten Seite V1 eines schlecht wärmeleitfähigen und über ein mit Durchlaßöffnungen Vd versehenen Verbindungschip V, für den im Beispiel ein 1,1 mm dicker Pyrexglaschip eingesetzt ist, aufgebracht und mit diesem durch anodisches Bonden derart verbunden, daß genannte Zu- und Abflußmündungen und von den Durchlaßöffnungen Vd erfaßt sind.
Die rückseitige Verbindung der Teilwege A1...An und der Teilwege C1...Cn erfolgt durch ein auf der zweiten Seite V2 des Verbindungschips V angebondetes zweites Substratplättchen B, für welches im Beispiel ebenfalls ein Silizumchip mit den Maßen (12•10•0,5) mm verwendet ist, in den sich längs erstreckende Gräben einer Länge von 9 mm, einer Breite von 0,536 mm und einer Tiefe von 0,38 mm eingebracht sind. Diese n Kanäle, im Beispiel vier: B1...B4, übernehmen jeweils den strömenden Fluß von A nach C. Weiterhin sind zwischen diesen Kanälen B1...B4 jeweils zwischenliegend n-1 Kamäle, im Beispiel drei: BB1...BB3, vorgesehen, die den rückströmenden Fluß von C nach A übernehmen. Die rückführenden Kanäle sind dabei so ausgebildet, daß sie zunächst durch Gräben gebildet sind, daß sie eine Länge von 9 mm, eine Breite von 0,26 mm und einer Tiefe von 0,184 mm aufweisen und somit ein Volumen von 0,2 µl aufzunehmen vermögen, wohingegen die hinführenden Kanäle B1...B4 ein Volumen von 0,9 µl aufnehmen. Weiterhin ist es im Rahmen der Erfindung vorteilhaft, die rückführenden Kanäle BB1...BB3 des Substratplättchens B mit einer thermisch isolierenden Auskleidung gegenüber dem Wandungsmaterial des Substratplättchens B zu versehen. Dies kann im zusammengebauten Zustand des Temperaturzonen Flußreaktors durch Durchleitung und wandungsmäßiger Anlagerung eines Polymers vorgenommen werden. In jedem Fall soll den rückführenden Kanälen ein verringerter Strömungsquerschnitt derart gegeben sein, daß die Durchflußgeschwindigkeit durch die rückführenden Gräben (BB1...BBn-1) gegenüber der durch die Gräben (B1...Bn) wenigsten um ein 3faches erhöht ist. Durch die im Beispiel beschriebene Aufteilung des einen geschlossenen Durchflußwegs in drei Teilwege A1...A4, B1...B4, BB1...BB3 und C1...C4 und die entsprechend angepaßten Bemaßungen der Grabenabschnitte innerhalb der jeweiligen Substratplättchen erreicht man, bei einer anliegenden Durchflußgeschwindigkeit von 1 µl/min, Verweilzeiten der einzelnen Proben in den jeweiligen Kanalbereichen der Substratplättchen A, B, C und damit entsprechend der dort vorgegebenen Temperaturen pro Durchgang durch den jeweiligen Teilabschnitt Einwirkzeiten wie folgt: Zone A = 55 s Zone B = 55 s im hinführenden Kanal und Zone B = 14 s im rückführenden Kanalzone C = 140 s. Da die Durchflußgeschwindigkeit in den rückführenden Kanälen BB1...BB3 wesentlich erhöht ist und die Kanäle, wie oben ausgeführt, vorzugsweise gegenüber dem Material des Substratplättchens B zusätzlich thermisch isoliert sind, sinkt die Probentemperatur beim Rücklauf nur unerheblich unter die, die sie im Bereich C angenommen hat. Ansonsten wird das Substratplättchen B einer externen Kühlung durch Kontaktierung an einen Kühlblock K, oder durch in Dünnschichttechnik aufgebrachte Peltierelemente, auf der erforderlichen Temperatur gehalten. Alternativ ist auch die Kühlung in einem Luftstrom möglich.
Dadurch, daß der Verbindungschip (V) aus einem optisch transparenten Material, z.B. Pyrexglas, gebildet ist und gemäß der Anordnung der Substratplättchen A, C zwischen diesen ein zugänglicher Freiraum verbleibt, ist die Möglichkeit einer optischen in situ Detektion von Reaktionspartnern in der Probe über eine Fluoreszenzdetektion eines zugegebenen Farbstoffs gegeben, was insbesondere für Analysezwecke äußerst vorteilhaft ist.
Für die Durchführung einer PCR sind im Beispiel die drei Temperaturzonen so ausgelegt, daß im Bereich des Substratplättchens A die Denaturierung einer doppelsträngige DNS durchgeführt werden kann, daß im Bereich des Substratplättchens B die Anlagerung von Primem an einzelsträngiger DNS ermöglicht ist (Annealing), und daß im Bereich des Substratplättchens C mittels TAQ-Polymerase die Primer-Extension ermöglicht ist. Die im Ausführungsbeispiel gemessenen Temperaturen betrugen: Zone A: 95°C; Zone B: 55°C; Zone C:72°C. Durch Anschluß eines externen Proportionalreglers kann die Temperatur in den Zonen auf 1°C konstant gehalten werden. Die Trägerflüssigkeit durchläuft in der beschriebenen Ausführung 4mal jede der genannten Zonen. Weiterhin sind der erste Zuflußweg, gebildet durch den Teilweg az1 bis aa1 im ersten Substratplättchen A und der letzte Abflußweg, gebildet durch den Teilweg cz4 bis ca4 im dritten Substratplättchen B gegenüber den sonstigen, auf den jeweiligen Substratplättchen vorgesehenen n Teilgräben verlängert ausgeführt, um den Prozessen am Ein- und Ausgang des vorgeschlagenen Temperaturzonen Flußreaktors eine längere Reaktionszeit für die PCR einzuräumen.
Am Auslaß, hier ca4, ist mittels eines nicht dargestellten Fotometermoduls eine Segmentierung der Probenflüssigkeit und der Einsatz des miniaturisierten Temperaturzonen Flußreaktors, entweder durch mehrfachen parallelen Einsatz des zu Fig. 1 beschriebenen Temperaturzonen Flußreaktors oder durch Vorsehen mehrerer geschlossener und gemäß der Erfindung in drei Zonen unterteilter Durchflußwege auf jeweils einer der Substratplättchen A, B, C zur Übergabe und parallelen Probenabgabe, wie oben beschrieben, ermöglicht.

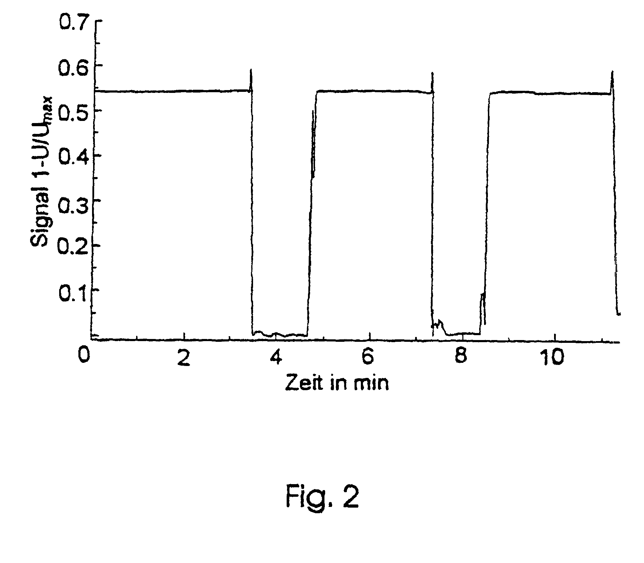

In Figur 2 ist beispielhaft das Signal eines solchen Fotometers am Ausgang des miniaturisierten Temperaturzonen Flußreaktors dargestellt, das verdeutlicht, daß es zu keiner Vermischung einzelner Probenbereiche während des Durchflusses kommt, wenn als Trägermedium für den Probentransport eine mit dem Proben nichtmischbare Flüssigkeit, insbesondere ein Öl, eingesetzt ist. Zur Testung wurde dabei eine eingefärbte Probe verwendet.

## Patentansprüche

1. Miniaturisierter Temperaturzonen Flußreaktor, beinhaltend wenigstens einen mehrfach gewundenen Durchflußweg, der durch mikrostrukturierte Ausnehmungen in einem ebenen Substrat gebildet ist, **dadurch gekennzeichnet, daß** jeder der einen geschlossenen Durchflußweg bildenden Durchflußwege in wenigstens drei Teilwege (A1...An; B1...Bn und BB1...BBn-1; C1...Cn) derart unterteilt ist, daß drei Substratplättchen (A; B; C), bestehend aus einem Material mit einer möglichst hohen Wärmeleitfähigkeit, vorgesehen sind, wobei die Substratplättchen auf einer Flächenseite vollständig, zumindest über den in den Substratplättchen vorgesehenen Grabenbereichen, flächig von mit regelbarer, variierbarer Temperatur beaufschlagbaren Heizmitteln (H) erfaßt sind,
das erste Substratplättchen (A) mit Einlässen (az1), deren Anzahl der Anzahl der vorgesehenen Durchflußwege entspricht, versehen ist und das dritte Substratplättchen (C) mit Auslässen (ca4), deren Anzahl der Anzahl der vorgesehenen Durchflußwege entspricht, versehen ist und genannte Substratplättchen (A; C) jeweils mit n Grabenabschnitten versehen sind, jeder der n Grabenabschnitte jeweils eine Zu- und Abflußmündung (az1...aa4; cz1...ca4) aufweist, welche einseitig im wesentlichen in einer Linie nebeneinander auf einer Teilseite des jeweiligen Substratplättchens angeordnet sind,
das erste Substratplättchen (A) und dritte Substratplättchen (C) voneinander beabstandet mit der Fläche, die den Heizmitteln (H) gegenüberliegt, auf einer ersten Seite (V1) eines schlecht wärmeleitfähigen und über ein mit Durchlaßöffnungen (Vd) versehenen Verbindungschip (V) aufgebracht und mit diesem derart verbunden sind, daß genannte Zu- und Abflußmündungen (aa1...aa4; cz1...cz4) von den Durchlaßöffnungen (Vd) erfaßt sind und die Durchlaßöffnungen auf der zweiten Seite des Verbindungschips (V2) über mikrostrukturierte Gräben, die die Teilwege (B1...Bn und BB1...BBn-1) des zweiten Substratplättchens (B) bilden, miteinander verbunden sind, wodurch jeweils ein geschlossener Durchflußweg mit n Durchläufen durch die Substratplättchen (A; B; C) gebildet ist.

2. Miniaturisierter Temperaturzonen Flußreaktor nach Anspruch 1, **dadurch gekennzeichnet, daß** von den Teilwegen (B1...Bn und BB1...BBn-1) des zweiten Substratplättchens (B) jeweils den rückführenden Gräben (BB1...BBn-1) ein gegenüber den restlichen n Gräben (B1...Bn) verringerter Strömungsquerschnitt derart gegeben ist, daß die Durchflußgeschwindigkeit durch die rückführenden Gräben (BB1...BBn-1) gegenüber der Durchflußgeschwindigkeit durch die restlichen Gräben (B1...Bn) wenigsten um ein 3faches erhöht ist.

3. Miniaturisierter Temperaturzonen Flußreaktor nach Anspruch 1 und 2, **dadurch gekennzeichnet, daß** die durch die rückführenden Gräben (BB1...BBn-1) gebildeten Kanäle mit einer thermisch gegen das Substratplättchen (B) isolierenden Auskleidung versehen sind.

4. Miniaturisierter Temperaturzonen Flußreaktor nach Anspruch 3, **dadurch gekennzeichnet, daß** die thermisch isolierende Auskleidung durch ein Polymer gebildet ist.

5. Miniaturisierter Temperaturzonen Flußreaktor nach Anspruch 1 und 2, **dadurch gekennzeichnet, daß** der Verbindungschip (V) aus einem optisch transparenten Material gebildet ist.

6. Miniaturisierter Temperaturzonen Flußreaktor nach Anspruch 1, **dadurch gekennzeichnet, daß** der erste Zuflußweg (az1 bis aa1) im ersten Substratplättchen (A) und der letzte Abflußweg (cz4 bis ca4) im dritten Substratplättchen (B) gegenüber den sonstigen, auf den jeweiligen Substratplättchen vorgesehenen n Teilgräben verlängert ausgeführt sind.

7. Miniaturisierter Temperaturzonen Flußreaktor nach Anspruch 1, **dadurch gekennzeichnet, daß** als Trägermedium für den Probentransport eine mit dem Proben nichtmischbare Flüssigkeit, insbesondere ein Öl, eingesetzt ist.

8. Miniaturisierter Temperaturzonen Flußreaktor nach Anspruch 1, **dadurch gekennzeichnet, daß** das zweite Substratplättchen (B) einseitig von einem flächigen Kühlmittel (K), zur Erzeugung einer gegenüber den durch die sonstigen Substratplättchen (A, B) abgesenkten Temperatur, erfaßt ist.

## Claims

1. Miniaturized temperature-zone flow reactor comprising at least one multifold wound flow path, formed in a plane substrate by microstructurized channels, **characterized in that** each of said flow paths constituting a closed flow path is subdivided into at least three partial paths (A1...An; B1...Bn, and BB1...BBn-1; C1...Cn) in such a way that three substrate chips (A; B; C), made of a material of a thermal conductivity as high as possible, are provided, whereby the substrate chips on one of their faces are, at least on those ranges being provided with channels, entirely and level captured by a heating means (H), which permits application of a controllable and variable temperature, and **in that** the first substrate chip (A) is provided with inlets (az1), the number of which corresponds to the number of the flow paths present, and that a third substrate chip (C) is provided with outlets (ca4), the number of which corresponds to the number of the flow paths present, and said substrate chips (A;C) are each provided with n channel sections, each of said n channel sections having an inlet opening and an outlet opening (az1...aa4; cz1...ca4) which are arranged on one side substantially along a line side by side on a partial section of the respective substrate chip, that the first substrate chip (A) and the third substrate chip C being spaced apart from one another are arranged via that surface, which is opposite to the heating means (H), on a first face (V1) of a connecting chip (V), which, being of poor thermal conductivity, is provided with passage openings (Vd), above said connecting chip (V), and connected to the latter in such a manner that said inlet openings (aa1...aa4) and said outlet openings (cz1...cz4) are captured by said passage openings (Vd), said passage openings (Vd) being connected with one another on the second face (V2) of said connecting chip (V) via microstructurized channels, which form the partial paths (B1...Bn, and BB1...BBn-1) of the second substrate chip (B), whereby one closed flow path each with n passages through the substrate chips (A; B; C) is constituted.

2. Miniaturized temperature-zone flow reactor as claimed in claim 1, **characterized in that** the respective return channels (BB1...BBn-1) of the partial paths (B1...Bn, and BB1...BBn-1) of the second substrate chip (B) are given a reduced flow cross-section compared to the remaining n channels (B1...Bn) in such a way, that the speed of passage flow through the return channels (BB1...BBn-1) is at least increased by the threefold relative to the speed of passage flow through the remaining channels (B1...Bn).

3. Miniaturized temperature-zone flow reactor as claimed in claims 1 and 2, **characterized in that** the channels formed by the return channels (BB1...BBn-1) are provided with a thermally insulating lining relative to the substrate chip (B).

4. Miniaturized temperature-zone flow reactor as claimed in claim 3, **characterized in that** the thermally insulating lining is constituted by a polymer.

5. Miniaturized temperature-zone flow reactor as claimed in claims 1 and 2, **characterized in that** the connecting chip (V) is made of an optically transparent material.

6. Miniaturized temperature-zone flow reactor as claimed in claim 1, **characterized in that** the first inlet path (az1 to aa1) in the first substrate chip (A) and the last outlet path (cz4 to ca4) in the third substrate chip (B) are designed longer than the remaining n partial channels provided on the respective substrate chips.

7. Miniaturized temperature-zone flow reactor as claimed in claim 1, **characterized in that** a liquid non-mixable with the sample, in particular oil, is used as a carrier medium for the sample transport.

8. Miniaturized temperature-zone flow reactor as claimed in claim 1, **characterized in that** the second substrate chip (B) on one side is captured by a level cooling means (K) to generate a reduced temperature compared to the temperature reduced by the remaining substrate chips (A, B).

## Revendications

1. Réacteur à flux miniaturisé comportant différentes zones de température comprenant au moins un parcours ondulé à plusieurs reprises, formé par des évidements microstructurés dans un substrat plan, est **caractérisé en ce que** chacun des parcours de passe en circuit fermé est subdivisé en au moins trois parcours partiels (A1...An; B1...Bn et BB1...BBn-1; C1...Cn) de manière à ce que trois plaquettes de substrat (A; B; C) réalisées dans un matériau à haute conductibilité thermique, soient prévues pour être soumises à l'action de différents moyens de chauffe (H), les plaquettes de substrat couvrant complètement la surface, au moins au-dessus des zones de creux prévues dans les plaquettes, par la chaleur à des températures réglables et variables,
la première plaquette de substrat (A) étant dotée d'entrées (az1) dont le nombre correspond au nombre des parcours de fluide prévus, et la troisième plaquette de substrat (C) pourvue de sorties (ca4), dont le nombre correspond à celui des parcours de fluides, les plaquettes de substrat en question (A; C) étant chacune pourvues de tranches de fosse, chacune des n tranches de fosse présentant une entrée d'affluence et une sortie d'évacuation (az1..aa4; cz1...ca4) toutes deux sur le même côté et pratiquement alignées l'une à côté de l'autre sur une zone partielle de la plaquette de substrat concernée,
la première plaquette de substrat (A) et la troisième plaquette de substrat (C) étant placées à une distance déterminée l'une de l'autre, la surface opposée au matériel de chauffe (H) étant mise en relation avec la première face (V1) d'une puce de liaison à mauvaise conductibilité thermique (V), et reliées ainsi étroitement avec celle-ci par les ouvertures de passe (Vd), de sorte que les dites entrées d'affluence comme les sorties d'évacuation (aa1...aa4; cz1...cz4) soient saisies par les ouvertures de passe (Vd) et que les ouvertures de passe situées sur la deuxième face de la puce de liaison (V2) soient reliées les unes aux autres par des tranchées microstructurées formant les parcours partiels (B1...Bn et BB1...BBn-1) sur la deuxième plaquette de substrat (B) ce qui permet d'obtenir de cette façon un circuit de passe fermé comportant n passages par les plaquettes de substrat (A; B; C).

2. Réacteur à flux miniaturisé comportant différentes zones de température selon la revendication 1 est **caractérisé en ce que** depuis les parcours partiels (B1...Bn et BB1...BBn-1) de la deuxième plaquette de substrat (B) et vers les tranchées de reflux (BB1...BBn-1) une section de passage réduite est pratiquée par rapport aux autres n tranchées (B1...Bn) de sorte que la vitesse de passe dans les tranchées de reflux (BB1...BBn-1) est trois fois plus grande que la vitesse de passe dans les autres tranchées (B1...Bn).

3. Réacteur à flux miniaturisé comportant différentes zones de température selon les revendications 1 et 2 est **caractérisé en ce que** les canaux formés par les tranchées de reflux (BB1..BBn-1) sont revêtus à l'intérieur d'un isolant thermique pour les isoler de la plaquette de substrat (B).

4. Réacteur à flux miniaturisé comportant différentes zones de température selon la revendications 3 est **caractérisé en ce que** le revêtement isolant thermique est constitué d'un polymère.

5. Réacteur de flux miniaturisé à différentes zones de température selon les revendications 1 et 2 est **caractérisé en ce que** la puce de liaison (V) est constituée d'un matériau optiquement transparent.

6. Réacteur de flux miniaturisé comportant différentes zones de température selon la revendication 1 est **caractérisé en ce que** le premier parcours d'affluence (az1 à aa1) dans la première plaquette de substrat (A) et le dernier parcours d'évacuation (cz4 à ca 4) dans la troisième plaquette de substrat (B) sont exécutés dans une configuration plus longue que les autres n tranchées partielles prévues sur la troisième plaquettes.

7. Réacteur de flux miniaturisé comportant différentes zones de température selon la revendication 1 est **caractérisé en ce que** le fluide porteur pour le transport des échantillons est un liquide, de préférence une huile qui ne se mélange pas avec les échantillons.

8. Réacteur de flux miniaturisé comportant différentes zones de température selon la revendication 1 est **caractérisé en ce que** la deuxième plaquette de substrat (B) est saisie unilatéralement par un agent réfrigérant surfacique (K) pour produire une température plus basse par rapport aux autres plaquettes de substrat (A, B).
